# EUROPEAN PATENT APPLICATION

(11) **EP 0 884 095 A1**
(43) Date of publication of application: **16.12.1998**
(21) Application number: 98201895.4
(22) Date of filing: 08.06.1998
(51) Int. Cl.: B01D 59/34

(54) **Method and apparatus for isotope-selective photoionization of mercury**

(30) Priority: 11.06.1997 NL 1006285
(71) Applicant: Urenco Nederland B.V., 7601 PJ Almelo (NL)
(72) Inventor: Buurman, Erik Pieter, 5506 EE Veldhoven (NL); Bente, Erwin Antonius Josephus Maria, 3813 CP Amersfoort (NL); Hogervorst, Willem, 3743 EH Baarn (NL)
(74) Representative: Smulders, Theodorus A.H.J., Ir.

(57) **Abstract**

Described is a four-step isotope-selective photoionization process for selectively ionizing isotope 196 of mercury. Mercury is brought into atomic vapor form, and irradiated with photons whose wavelength is set such that the isotope reaches from the ground state, in succession a first excitation level 5d¹⁰ 6s6p ³P₁ (A), a second excitation level 5d¹⁰ 6s7s ³S₁ (B), a third excitation level 5d⁹ 6s²6p ³P₂ (C1) or 5d¹⁰ 6s7p ³P₂ (C2), and finally an autoionization level 5d⁹(²D_{5/2}) 6s²nl (D).

## Description

The invention As is known, mercury occurs naturally as a mixture of different isotopes, such as the isotopes 196, 198, 199, 200, 201, 202, 204. In natural mercury, the mutual ratio of those isotopes is always the same. In general, there exists a need for a method for altering the contribution of a single isotope in a mixture of different mercury isotopes. If it is desired to increase the contribution of that single isotope, this is referred to as enrichment; if it is desired to reduce the contribution of that single isotope, this is referred to as depletion. In general, starting from a particular base composition, after treatment, two fractions are obtained, one fraction being enriched and the other being depleted, so that enrichment and depletion can be regarded as opposite sides of the same medal.

More specifically, there is a need for mercury in which the amount of ¹⁹⁶Hg is greater than the natural abundance, which is approximately 0.15%. An example of a field of the art where such a need exists is the field of mercury-discharge lamps. It is well known that the efficiency of a mercury-discharge lamp can be improved by employing mercury enriched in the contribution of the isotope 196. In this connection, reference is made, for instance, to U.S. Patent 4,379,252.

Accordingly, there is a need for a method for commercially producing ¹⁹⁶Hg, or at any rate mercury in which the amount of ¹⁹⁶Hg is greater than the natural abundance. Various enrichment techniques are known which would, in principle, be useful. Those techniques are all based on the fact that the physical and chemical properties of the different isotopes differ to a slight extent. An example of such a technique utilizes an ultracentrifuge, and is based on the mutual differences in mass. An associated problem here is that mercury has a tendency to form amalgam compounds with the material of such an installation.

Another example of a possible technique is a chemical method, based on the mutual differences in reaction rate in a reaction of mercury with hydrochloric acid, whereby mercury chloride is formed. A disadvantage of such a method is that the mercury chloride must subsequently be converted to metallic mercury again, which is a costly process. It is therefore desired to realize an enrichment process in which no chemical conversions of mercury occur.

The present invention proposes to utilize isotope-selective photoionization. Such a technique is known per se, and is described, for instance, for gadolinium in WO 93/03826. This method is based on the fact that the energy levels of different isotopes have different energies, with the result that the absorption spectra are mutually different. What the method of isotope-selective photoionization amounts to, briefly stated, is that mercury is brought into the vapor phase and the mercury atoms in the vapor are irradiated with beams of photons. By absorption of photons, mercury atoms are excited from the ground state to successive excited states, to eventually achieve an autoionization state, that is, a state in which the atom, after a short time, decomposes into an ion and an electron. By means of an electrical field, the ion can then be removed from the vapor, whereafter it can become an atom again by capturing an electron. Depending on the objective, the removed atom is regarded as waste or as a desired product.

For the successive absorption steps, photons (laser light) are needed with accurately determined wavelengths. It is then of importance to set the wavelengths of the photons such that they accurately match the energy levels of a single isotope, so that atoms of that one isotope are preferentially ionized, that is, that the atoms of the other isotopes hardly, if at all, absorb those photons, at least are hardly, if at all, ionized by them.

The object of the present invention is to provide an isotope-selective photoionization method in which the ionization proceeds as efficiently as possible, that is, that the ionization degree at a particular laser intensity is as high as possible.

It is a further object of the present invention to provide an isotope-selective photoionization method in which the required photons are producible in a relatively inexpensive manner.

More specifically, the object of the present invention is to provide an economically profitable isotope-selective photoionization method.

These and other aspects, features and advantages of the present invention will be clarified by the following description of preferred embodiments of a method according to the invention, with reference to the drawings, wherein:
Fig. 1 schematically illustrates the energy levels of the ionization schemes proposed by the present invention;
Fig. 2 schematically illustrates an arrangement for generating the necessary laser beams;
Fig. 3 schematically illustrates another arrangement for generating the necessary laser beams;
Figs. 4A and 4B schematically illustrate the construction of an apparatus for practising the method; and
Figs. 5A and 5B schematically illustrate the construction of another apparatus for practising the method.

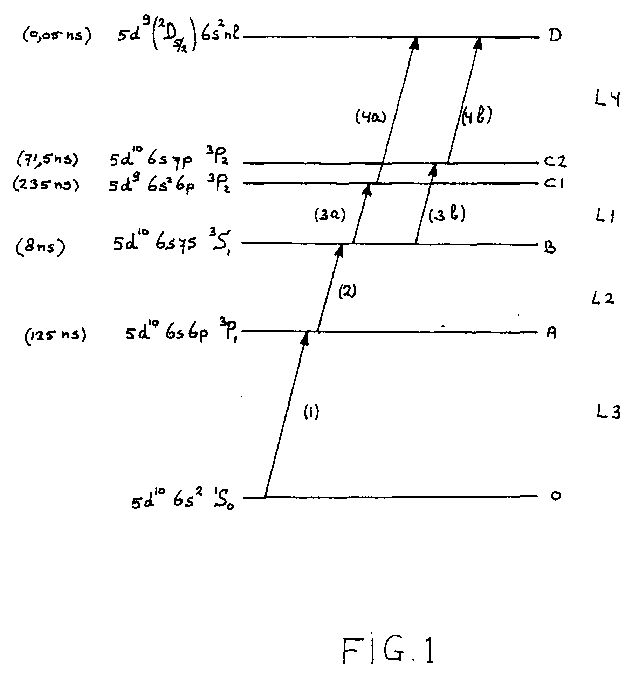

Fig. 1 shows six energy levels of mercury which are of interest in the framework of the present invention, and which are respectively denoted by 0, A, B, C1, C2, and D.

The lowermost level, the ground state, has an electron structure 5d¹⁰ 6s^{2 1}S₀; the energy of this level will be denoted by 0.

The next level A has an electron structure 5d¹⁰ 6s6p ³P₁. The energy of this level A with respect to the ground state is approximately 39412.597 ± 0.002 cm⁻¹ for ¹⁹⁶Hg; the lifetime of the level A is approximately 125 ns.

The next level B has an electron structure 5d¹⁰ 6s7s ³S₁. The energy of this level B is approximately 62350.65 ± 0.10 cm⁻¹ for ¹⁹⁶Hg; the lifetime of the level B is approximately 8 ns.

The fourth level C1 has an electron structure 5d⁹ 6s²6p ³P₂. The energy of this level C1 is approximately 68886.42 ± 0.10 cm⁻¹ for ¹⁹⁶Hg; the lifetime of the level C1 is approximately 235 ns.

The fifth level C2 has an electron structure 5d¹⁰ 6s7p ³P₂. The energy of this level C2 is approximately 71207.61 ± 0.10 cm⁻¹ for ¹⁹⁶Hg; the lifetime of the level C2 is approximately 71.5 ns.

The last level D has an electron structure 5d⁹(²D_{5/2}) 6s²nl, where n and l are, respectively, the principal and secondary quantum numbers of the outermost electron; at present, these are still unknown. The energy of this level D is approximately 111079.0 ± 0.5 cm⁻¹ for ¹⁹⁶Hg. The level D is an autoionization level whose lifetime is approximately 0.05 ns, that is, the atom, after achieving level D, ejects an electron virtually directly and remains behind as an ion.

The four levels A, B, C1 and C2 and the associated energies are known per se, for instance from publications by Gerstenkorn et al. in Physica Scripta, 1977, vol.15, pp. 167-172 and pp. 173-176. To date, this level D is unknown.

The present invention proposes a four-step photoionization process, with two variants. In a first step of the photoionization process according to the present invention, mercury atoms are excited from the ground state to the level A (step (1) in Fig. 1). To that end, the mercury atoms are irradiated with photons whose wavelength (in vacuo) is 253.726 ± 0.001 nm.

In a second step of the photoionization process according to the present invention, mercury atoms are excited from the level A to the level B (step (2) in Fig. 1). To that end, photons are needed whose wavelength (in vacuo) is 435.957 ± 0.01 nm.

In a third step of the photoionization process according to the present invention, mercury atoms are excited from the level B either to the level C1 (first alternative, step (3a)), or to level C2 (second alternative, step (3b)).

In a fourth step of the photoionization process according to the present invention, mercury atoms are excited from the level C1 and the level C2, respectively, to the autoionization level D (step (4a) and (4b), respectively).

For the first alternative, photons are needed whose wavelength (in vacuo) is approximately 1530.04 ± 0.01 nm (B → C1), as well as photons whose wavelength (in vacuo) is approximately 237.01 ± 0.01 nm (C1 → D). For the second alternative, photons are needed whose wavelength (in vacuo) is approximately 1129.06 ± 0.01 nm (B → C2), as well as photons whose wavelength (in vacuo) is approximately 250.80 ± 0.01 nm (C2 → D).

If laser beams of the wavelengths mentioned are presented to a cloud of mercury isotopes, isotopes 196 will be able to traverse the four successive excitation steps described in the foregoing, thereby to be ionized. Other mercury isotopes cannot, or can at most to a much lesser extent, traverse these four successive excitation steps, because the photons needed for that have other wavelengths. By way of example, for an isotope ²⁰²Hg the energy of the level A is approximately 39412.122 cm⁻¹, so that for exciting this isotope from level 0 to level A a photon of a wavelength of 253.729 nm (in vacuo) is needed.

In principle, the four excitation steps described in the foregoing are traversed in succession by a mercury atom. It can be imagined here that an atom which has achieved one of the respective excited states A, B, C1 and C2, after a certain lingering period, either falls back by spontaneous emission, or absorbs a next photon. In general, it holds that the excitation process proceeds more efficiently according as the time interval between the successive photons is shorter, because a shorter time interval increases the chances that an excited atom is excited to a next level, while decreasing the chances that the atom falls back from the excited level by spontaneous emission.

It has been found that the efficiency of the ionization process is optimal if the different photons mentioned are present simultaneously. This condition can be met by using continuous beams, which can then be generated, in principle, by independent laser devices. In general, however, it is more useful to utilize pulsed driven laser devices for providing relatively short laser pulses; in that case, there should be synchronization between the different laser devices to satisfy the time criteria set. Since the shortest lifetime of the levels in question is 8 ns, the laser pulses are preferably shorter than 8 ns, more preferably shorter than 4 ns.

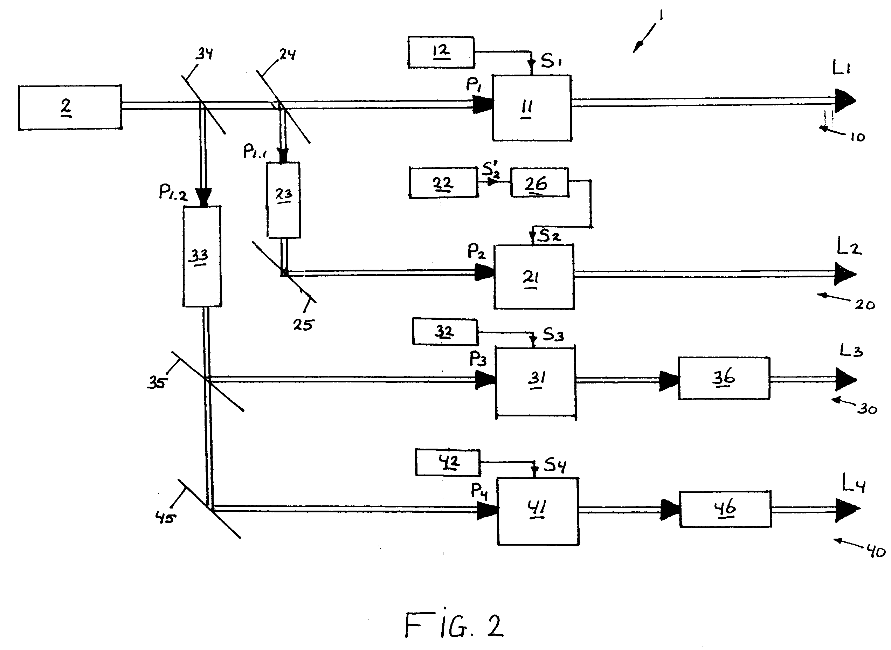

Fig. 2 illustrates schematically an example of an arrangement proposed according to the present invention, of a system of laser sources which makes it possible to generate four laser pulses of suitable wavelengths practically simultaneously.

The laser source system 1 illustrated in Fig. 2 comprises four laser sources 10, 20, 30, 40, which generate, respectively, laser beams L1, L2, L3 and L4, whose wavelengths are, respectively, approximately 1530 nm, 436 nm, 254 nm, and 237 nm, so that those four laser beams L1, L2, L3 and L4 are useful in the four-step process of the first variant.

The first laser source 10 comprises a first optical parametric oscillator (OPO) 11 of the type KTP, which is accurately tuned to supply laser light L1 of the wavelength 1530.042 nm. The first OPO 11 is seeded with seed light S1, coming from a first seed diode laser 12, and is pumped with pump light P1, coming from an Nd:YAG laser source 2. The wavelength of the pump light P1 coming from the laser source 2 is approximately 1064 nm.

Since the nature and construction of an optical parametric oscillator do not constitute a subject of the present invention, and a knowledge thereof is not required for one skilled in the art to properly understand the present invention, it will not be further described. Suffice it to note that optical parametric oscillators are known per se, and that it is clear to one skilled in the art how an optical parametric oscillator can be arranged for supplying a particular desired wavelength. By way of illustrative example, reference is made to Dutch patent application 94.00628.

The second laser source 20 comprises a second OPO 21 of the type BBO, which is tuned to supply laser light L2 of the wavelength 435.957 nm. The second OPO 21 is seeded with seed light S2, coming from a second seed diode laser 22, and is pumped with pump light P2, which is derived from the pump light P1 coming from the laser source 2. In the illustrated embodiment, the pump light P2 is supplied by a first third-harmonic generator (THG) 23, which at an input receives a part of the pump light P1, so that the wavelength of the pump light P2 is approximately 355 nm. To that end, in the illustrated embodiment, a first semi-transparent mirror 24 is arranged in the path of the pump light P1 to reflect a first fraction P1.1 of that pump light P1 to the input of the first THG 23. By means of a mirror 25 arranged in the path of the pump light P2, it can be ensured that the laser light L2 is directed parallel to the laser light L1.

A THG is a device arranged for receiving an input laser beam and for supplying an output laser beam whose wavelength is equal to the wavelength of the input laser beam divided by three. Since the nature and construction of such devices do not constitute a subject of the present invention, and a knowledge thereof is not required for one skilled in the art to properly understand the present invention, it will not be further described. Suffice it to note that such devices are known per se, and that use can be made of a THG which is known per se.

The third laser source 30 comprises a third OPO 31 of the type LBO, which is tuned to provide laser light of a wavelength of approximately 761.178 nm. This laser light is applied to a second THG 36, whose output light L3 accordingly has a wavelength of approximately 253.726 nm. The third OPO 31 is seeded with seed light S3, coming from a third seed diode laser 32, and is pumped with pump light P3, which is derived from the pump light P1 coming from the laser source 2. In the illustrated embodiment, the pump light P3 is provided by a first second-harmonic generator (SHG) 33, which at an input receives a part of the pump light P1, so that the wavelength of the pump light P3 is approximately 532 nm. To that end, in the illustrated embodiment, a second semi-transparent mirror 34 is arranged in the path of the pump light P1, to reflect a second fraction P1.2 of that pump light P1 to the input of the first SHG 33. By means of a mirror 35 arranged in the path of the pump light P3, it can be ensured that the laser light L3 is directed parallel to the laser light L1.

An SHG is a device arranged for receiving an input laser beam and for providing an output laser beam whose wavelength is equal to the wavelength of the input laser beam divided by two. Since the nature and construction of such devices do not constitute a subject of the present invention, and a knowledge thereof is not required for one skilled in the art to properly understand the present invention, it will not be further described. Suffice it to note that such devices are known per se, and that use can be made of an SHG which is known per se.

The fourth laser source 40 comprises a fourth OPO 41 of the type LBO, which is tuned to provide laser light of a wavelength of approximately 711.020 nm. This laser light is applied to a third THG 46, whose output light L4 accordingly has a wavelength of approximately 237.007 nm. The fourth OPO 41 is seeded with seed light S4, coming from a fourth seed diode laser 42, and is pumped with pump light P4, which is derived from the pump light P1 coming from the laser source 2. In the illustrated embodiment, the pump light P4 is provided by the first second-harmonic generator (SHG) 33. To that end, in the illustrated embodiment, the mirror 35 is a semi-transparent mirror: the fraction reflected by the mirror 35 functions as pump light P3, while the fraction transmitted by the mirror 35 functions as pump light P4. To ensure that the laser light L4 is directed parallel to the laser light L1, a mirror 45 is arranged in the path of the pump light P4.

In Fig. 2 it is merely illustrated how the four wavelengths needed for the first alternative according to the present invention can be generated. It will be clear to one skilled in the art that in a comparable manner the four wavelengths needed for the second alternative can be generated. To that end, for instance, the first OPO 11 can be modified to be tuned to approximately 1129.056 nm, and the fourth OPO 41 can be modified to be tuned to approximately 752.413 nm.

Since the nature and construction of seed diode lasers do not constitute a subject of the present invention, and a knowledge thereof is not required for one skilled in the art to properly understand the present invention, these will not be further described. Suffice it to note that seed diode lasers are devices known per se, which are manufactured as a structure of layers of materials such as Ga, As, In, P, Al, and that it is possible by choosing a suitable combination of the materials and the layer thickness and the layer sequence, to obtain laser action at a desired wavelength, as will be clear to one skilled in the art. Thus, the first seed diode laser 12 is arranged to generate seed light S1 of a wavelength of approximately 1530.042 nm and a power of a few mWatt; the third seed diode laser 32 is arranged to generate seed light S3 of a wavelength of approximately 761.178 nm and a power of a few mWatt; and the fourth seed diode laser 42 is arranged to generate seed light S4 of a wavelength of approximately 711.020 nm and a power of a few mWatt.

To date, by conventional techniques, no seed diode laser which generates light at a wavelength lower than 620 nm has been successfully manufactured. For the second OPO 21 the seed light S2 should have a wavelength of approximately 435.957 nm. In the illustrated embodiment, this is effected in that the second seed diode laser 22 is arranged to generate light S2' of a wavelength of approximately 871.913 nm and a power of a few mWatt. This light is applied to a second SHG 26, which at its output supplies the desired seed light S2.

The intensities of the four laser beams L1 through L4 are preferably not equal to each other. This is to do with the fact that the transition probabilities of the four excitation steps mentioned differ from each other. For an excitation step whose transition probability is relatively small, the intensity of the laser beam should be selected to be relatively high, to ensure that as many of the desired isotopes ¹⁹⁶Hg as possible are ionized. Preferably, the ratio of the intensities of the four laser beams L1 : L2 : L3 : L4 is set to be approximately 2 : 1 : 7 : 14 for the first excitation variant.

For the ionization process to proceed efficiently, approximately 120 µJ/cm² is needed, calculated from the ground state. Accordingly, the intensities of the four laser beams L1 through L4 are preferably at least approximately 10, 5, 35 and 70 µJ/cm², respectively. Preferably, however, the intensities mentioned are selected to be amply higher, while maintaining the ratio mentioned, such that the total energy available is approximately 200 µJ/cm².

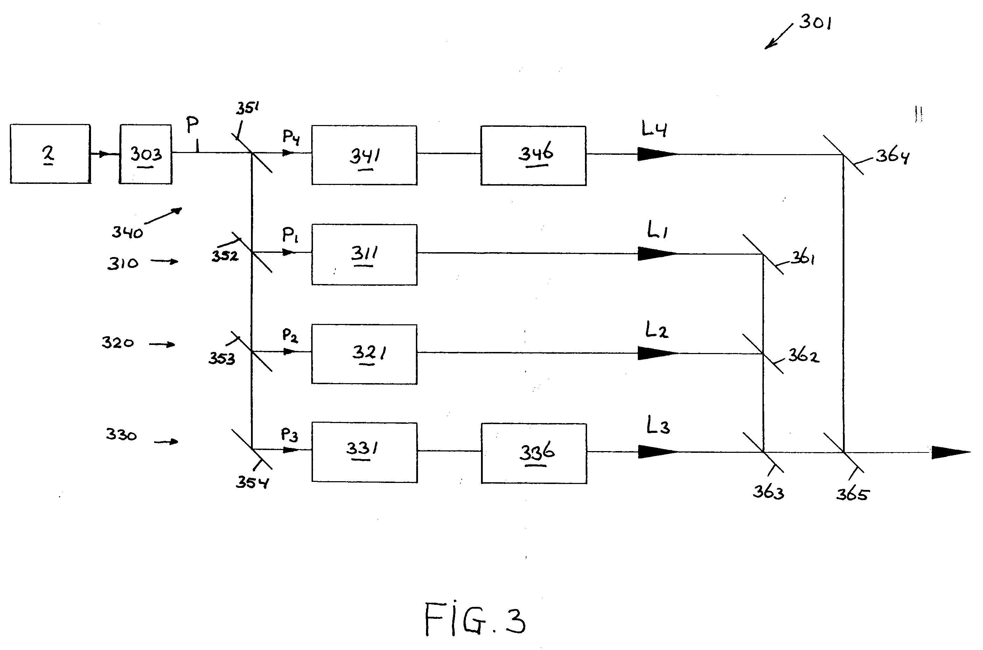

Fig. 3 illustrates schematically an arrangement which is preferred according to the present invention, for generating the four laser pulses practically simultaneously.

The laser source system 301 illustrated in Fig. 3 comprises four laser sources 310, 320, 330, 340, which generate, respectively, laser beams L1, L2, L3 and L4, whose wavelengths are, respectively, approximately 1530 nm, 436 nm, 254 nm, and 237 nm, so that the four laser beams L1, L2, L3 and L4 are useful in the four-step process of the first variant.

In broad outline, the laser source system 301 of Fig. 3 is similar to the laser source system 1 of Fig. 2, for which reason the description of the laser source system 301 will be less extensive than the description of the laser source system 1. The first laser source 310 comprises a first OPO 311, which is accurately tuned to supply laser light L1 of the wavelength of approximately 1530.042 nm. The second laser source 320 comprises a second OPO 321, which is tuned to supply laser light L2 of the wavelength 435.957 nm. The third laser source 330 comprises a third OPO 331, which is tuned to provide laser light of a wavelength of approximately 507.452 nm. This laser light is applied to an SHG 336, whose output light L3 accordingly has a wavelength of approximately 253.726 nm. The fourth laser source 340 comprises a fourth OPO 341, which is tuned to supply laser light of a wavelength of approximately 474.013 nm. This laser light is fed to an SHG 346, whose output light L4 accordingly has a wavelength of approximately 237.007 nm.

In this case, the four OPO's 311, 321, 331, 341 are of the type SLM ("single longitudinal mode"), which is a type of OPO known per se. An important advantage of the use of these OPO's is that the use of seed diode lasers is not needed anymore. This provides for a considerable simplification and saving of costs, the more so since the four OPO's 311, 321, 331, 341 can now be identical (with the understanding that they are differently set).

The four OPO's 311, 321, 331, 341 are pumped with, respectively, pump light P1, P2, P3 and P4 of mutually the same wavelength, in this case approximately 355 nm. To that end, the laser source system 301 comprises an Nd:YAG laser source 2, supplying light of approximately 1064 nm. The light coming from the Nd:YAG laser source 2 is applied to a THG 303, which at its output accordingly provides pump light P of a wavelength of approximately 355 nm. This pump light P can be distributed to the four OPO's 311, 321, 331, 341 in different ways. In the example shown, three partly reflective mirrors 351, 352 and 353 and a totally reflective mirror 354 are used. The pump light P is directed to the first partly reflective mirror 351; the transmitted light functions as pump light P4, and the reflected light reaches the second partly reflective mirror 352. The light reflected by the second mirror 352 functions as pump light P1, and the transmitted light reaches the third partly reflective mirror 353. The light reflected by the third mirror 353 functions as pump light P2, and the transmitted light, after reflection from the fourth mirror 354, functions as pump light P3.

Other arrangements for the mirrors are also possible. Preferably, the transparency and transmission characteristics of the mirrors are selected such that the ratio of the light intensities of the four pump beams P1, P2, P3, P4, while taking into account the efficiency of the four OPO's 311, 321, 331, 341 and the SHG's 336 and 346, corresponds to the desired ratio of the light intensities of the four light beams L1, L2, L3 and L4.

In Fig. 3 it is further illustrated how the four light beams L1, L2, L3 and L4 can be merged. To that end, in the illustrated example, use is made of two totally reflective mirrors 361, 364, two dichroic mirrors 362, 363 and a polarizer mirror 365. The light beam L1 is reflected by the second fully reflective mirror 361 to the first dichroic mirror 362. The first dichroic mirror 362 transmits the light L1 and reflects the light beam L2 in the same direction as the transmitted light L1. The combination of the light L1 and L2 is reflected by the second dichroic mirror 363, which transmits the light beam L3. The combination of the light beams L1, L2 and L3 passes the polarizer mirror 365. The light beam L4 is reflected by the third fully reflective mirror 364 to the polarizer mirror 365, which reflects the light L4.

Laser beams can also be superposed, that is, combined, by means of other optical components such as prisms and/or polarization-sensitive components.

In theory, the mirror 365 could be a dichroic mirror. In practice, however, this is difficult to realize, because this mirror has the task of transmitting light L3 and reflecting L4, while the wavelengths of these two light beams are very close to each other. Accordingly, the mirror 365 is preferred to be a polarizer, which transmits light which is polarized linearly in a first direction (L1, L2, L3) and reflects light of any other polarization direction, for instance light which is polarized linearly in a second direction perpendicular to the first direction.

In the depicted example of Fig. 3, the OPO's 311, 321, 331, 341 all preferably have a horizontal polarization. The SHG's 336, 346 by nature have the property that the polarization of the outgoing light of wavelength ½λ makes an angle with the polarization of the incoming light of wavelength λ. The magnitude of that angle is dependent on the type of SHG. In a particular type, designated type I, that angle is 90°, so that L4 in that case has a vertical polarization. To ensure that L3, too, has the proper, that is, horizontal polarization, a ½λ-plate may be included, for instance in the light path after OPO 331, preferably between the OPO 331 and the SHG 336. In another type, designated type II, the angle mentioned is 45°. It will be clear to one skilled in the art that in that case, too, a polarization-rotating part can be included in the light path after OPO 331, to ensure that L3, too, has a horizontal polarization. For an explanation of the designations "type I" and "type II", reference is made to the book "Nonlinear Optics" by Robert W. Boyd, Academic Press, Inc., San Diego, California, U.S.A., 1992, ISBN 0-12-121680-2, for instance pp. 88 *ff*.

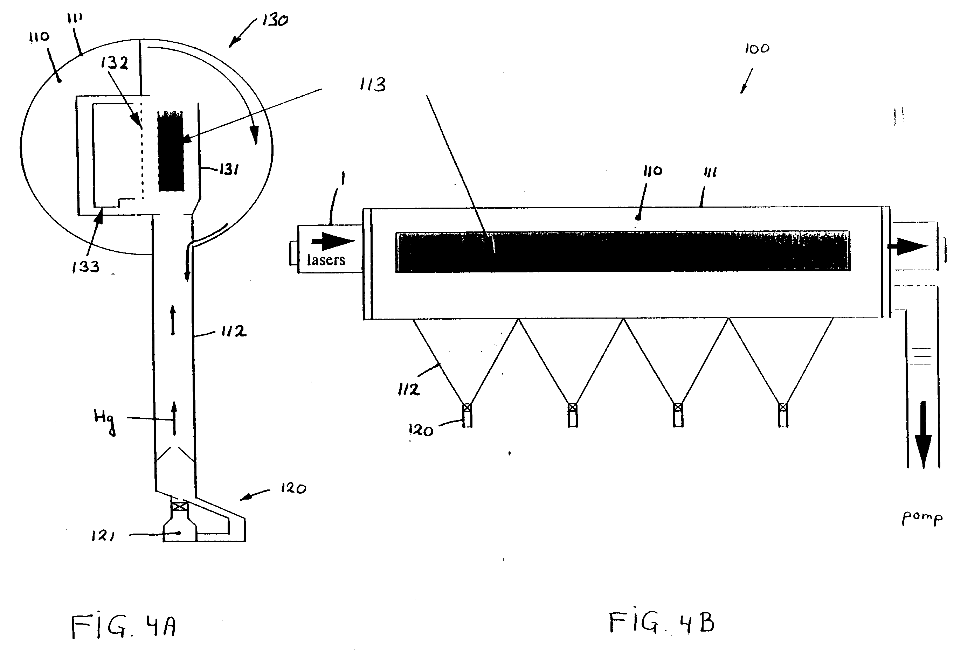

Figs. 4A and 4B schematically show two mutually perpendicular side elevations of an example of a construction of a mercury separator 100 according to the present invention. The separator 100 comprises an ionization space 110 which can be defined by a horizontally directed tube 111, to which a high vacuum can be applied by means of vacuum pumps, not shown for clarity. Disposed under the tube 111 is at least one, but preferably several, sources 120, distributed along the length of the tube 111, for producing a beam of mercury atoms. Since such sources are known per se, they will not be further described. Suffice it to note that the source 120 can have a heatable reservoir 121. The mercury atoms produced move up to the ionization space 110, and there pass an interaction area 113, in hatched representation, where they can be excited and ionized by photons, as will be explained in more detail. Non-ionized mercury atoms reach the top wall of the tube 111, where they condense and flow back along the wall to reach the reservoir 121 again. Preferably, the walls of the tube 111 and of the funnel-shaped connecting tubes 112 between the tube 111 and the sources 120 are cooled to a temperature just above the melting point of mercury, that is, -39 °C.

At a first end of the tube 111, a laser source is arranged, for instance the laser system 1 discussed with reference to Fig. 2 or the laser system 301 discussed with reference to Fig. 3, such that the produced photons travel substantially horizontally through the space 110, through the interaction area 113 mentioned. To ensure that a sufficiently large fraction of the photons produced is utilized, the length of the interaction area 113 should be sufficiently great, preferably greater than one meter.

If the laser beams are properly tuned and have a sufficient intensity, a large part of the ¹⁹⁶Hg atoms (typically about 70%) will be ionized. To extract these ions from the interaction area 113, electrical extraction means 130 are arranged in the space 110. Those extraction means comprise two electrodes arranged on opposite sides of the interaction area 113, to which electrodes a high voltage can be applied by means of a voltage source, not shown for clarity, in order to generate in the interaction area 113 an electrical field of a relatively high field strength (typically 1 kV/cm or more). The negative electrode has a form suitable for catching and collecting the mercury ions (after capture: atoms), and is also designated as collector plate. Preferably, and as illustrated in Fig. 4A, the extraction means 130 comprise a positive electrode 131, a grid-shaped accelerator plate 132 and the collector plate 133. The high accelerating voltage mentioned is applied between the grid 132 and the positive electrode 131, while to the collector plate 133 a voltage is applied that is less negative than the grid 132, so that the ions that pass the grid 132 are decelerated before reaching the collector plate 133. As a result, wear of the collector plate 133 through sputtering by a bombardment of high-energy ions is prevented. The grid 132 *will* be subject to such wear, but to a lesser extent because a large number of the ions arriving at the grid 132 will pass that grid unhindered, depending on the degree of transmission (openness) of the grid 132.

It will be clear that in the interaction area, with increasing distance of the laser source 1, the intensity of the laser beams diminishes, because photons disappear from the beam through absorption. If the length of the interaction area 113 is selected to be so high that all photons produced are utilized (absorbed), the intensity at the end of the interaction area 113 will be so small that the Hg atoms produced there are not efficiently ionized, since the percentage of Hg atoms that is ionized there will become particularly small. Conversely, as the length of the interaction area 113 is reduced, the percentage of Hg atoms that is ionized at the end of the interaction area 113 will increase, but at the same time the intensity of the laser beams at the end of the interaction area 113 will also increase, which implies that fewer and fewer of the photons generated are usefully absorbed. The length of the interaction area 113 to be chosen is therefore a compromise between efficient use of the photons generated and efficient ionization of the mercury atoms produced, while account should be taken here, among other things, of the energy required for generating the photons on the one hand and producing the mercury atoms on the other. A suitable length of the space 110 is about 1 m.

In the foregoing, it has been mentioned that the four laser beams L1, L2, L3 and L4 preferably have mutually different intensities to compensate for the mutually different transition probabilities of the excitation steps in the ionization process. Because the laser light associated with a relatively weak transition must have a relatively high intensity at entry of the interaction area 113 and will be absorbed in a relatively little amount in the interaction area 113, this laser light will, at the end of the interaction area 113, still have a relatively high intensity compared to the laser light associated with a relatively strong transition. However, the unutilized laser light need not be lost at the end of the interaction area 113. By means of mirrors, not shown for clarity, the unutilized laser light can be reflected to traverse the interaction area 113 once again. Alternatively, likewise by means of mirrors, the unutilized laser light can be fed to the input of an interaction area of a second ionization space 110 (not shown). Thus the separator 100 can comprise several juxtaposed ionization spaces 110.

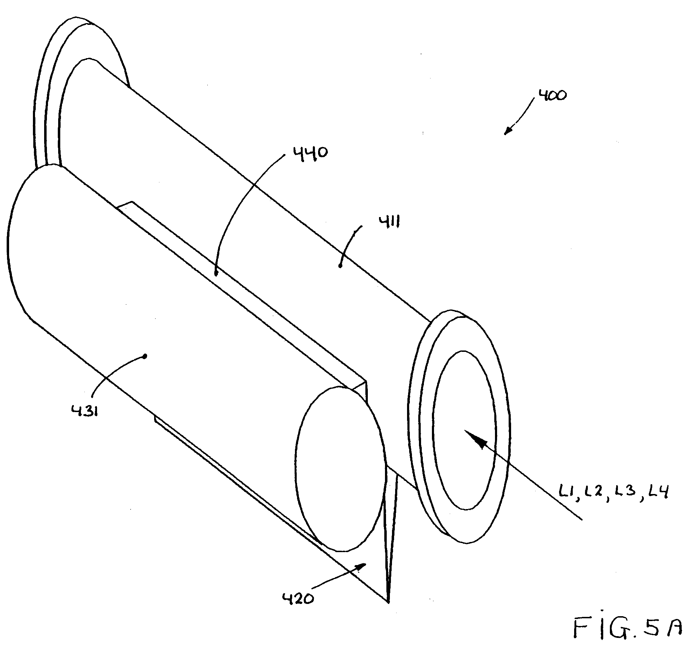

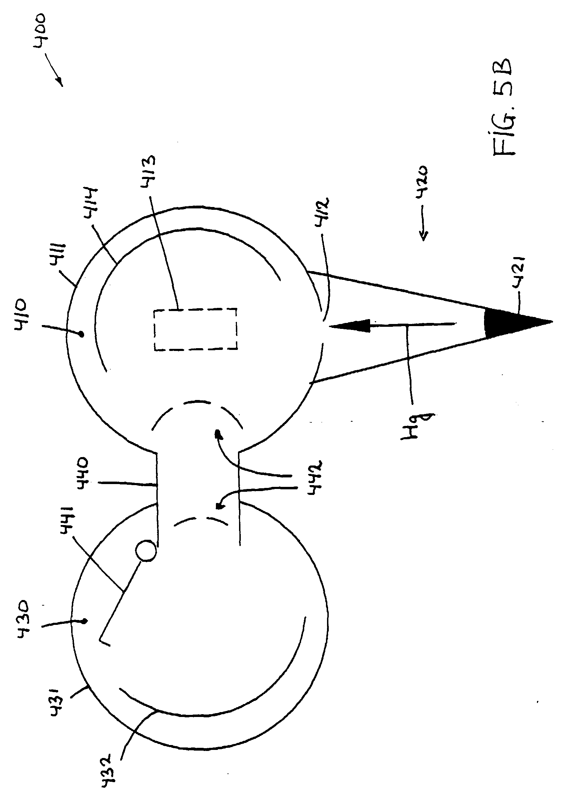

Figs. 5A and 5B illustrate another embodiment of a separator 400, which, in terms of process, is simpler to operate and therefore is preferred. Fig. 5A shows a perspective view of the separator 400 and Fig. 5B shows a cross-section of the separator 400.

In a comparable manner to that described in respect of the separator 100, the separator 400 comprises an ionization space 410, which can be defined by a horizontally directed tube 411, to which a high vacuum can be applied by means of vacuum pumps, not shown for clarity. A source for mercury is generally indicated by the reference numeral 420; a reservoir for liquid mercury is generally indicated by the reference numeral 421 and is disposed under the tube 411. A beam of mercury atoms moves up from the reservoir 421 to reach, through a collimation slit 412 in the underside of the tube 411, an interaction area 413 indicated by a dotted line. Further, in the tube 411 a screen 414 is placed, which is kept at a low temperature, and which serves to catch non-ionized mercury atoms which have passed the interaction area 413.

In a manner comparable to that discussed with reference to Figs. 4A and 4B, at a first end of the tube 411 a suitable laser source (for instance 1 or 301) is arranged, for introducing the photons L1 through L4 into the interaction area 413, in Fig. 5A merely indicated diagrammatically with an arrow.

The ions produced in the interaction area 413 are extracted from the interaction area 413 by electrical extraction means. These electrical extraction means are not shown for clarity. Suffice it to note that the electrical extraction means can have a comparable construction to that illustrated in Fig. 4A.

The separator 400 further comprises a collecting chamber 430 defined, in the example shown, by a second tube 431 arranged next to the tube 411. The second tube 431 is connected to the first tube 411 by a communication channel 440, which can be closed by means of a valve 441 arranged in the second tube 431. The communication channel 440 is provided with electrostatic lenses 442.

The mercury ions extracted from the interaction area 413 reach the collecting chamber 430 via the electrostatic lenses 442, and are caught in the collecting chamber 430 on a collector screen 432. The collector screen 432 is held at a very low temperature, lower than -70° C, so that the mercury ions caught by the collector screen 432 freeze onto the collector screen 432.

When it is desired to "harvest", i.e. remove from the collecting chamber 430, the mercury collected by the collector screen 432, the valve 441 is closed, and after the pressure inside the collecting chamber 430 has been made equal to the ambient pressure, a door (not shown), preferably present at an end of the collecting chamber 430, is opened, and the collector screen 432, with the mercury frozen onto it, is taken out of the collecting chamber 430. By heating, the mercury liquefies and can be deposited in a closable container (not shown). An important advantage here is that during "harvesting" the ionization space can be maintained in vacuum condition.

Another possibility for "harvesting" involves thermal transport, i.e. an evaporation and condensation process. Again, the valve 441 is closed, but the collecting chamber 430 is also maintained in vacuum condition. The collector screen 432 is heated, and the mercury present on the collector screen 432 evaporates. A harvesting element (not shown), for instance arranged at an end of the collecting chamber 430, is held at a low temperature, such that the mercury evaporating from the collector screen 432 condenses on that harvesting element, either in liquid or in solid form (freezing). If that harvesting element is arranged in a harvesting portion of the collecting chamber 430, which harvesting portion can be closed off from the rest of the collecting chamber 430 by a valve, it is possible, when taking out the harvesting element, to keep the collecting chamber 430 in vacuum condition too.

It will be clear to those skilled in the art that the scope of protection of the present invention as defined by the claims is not limited to the embodiments discussed and represented in the drawings, but that it is possible to alter or modify the represented embodiments of the ionization method according to the invention within the scope of the inventive concept. Thus, it is for instance possible that instead of ¹⁹⁶Hg a different isotope is ionized, by setting the wavelengths associated with that isotope.

It is also possible that the ionization method according to the present invention is not used for enriching an isotope, but is used as a detection method for demonstrating the presence of even minor quantities of that isotope in a sample.

## Claims

1. A method for selectively photo-ionizing an isotope of mercury, wherein mercury is brought into atomic vapor form, and wherein the mercury vapor is subjected to radiation which contains at least four different wavelengths, which wavelengths are chosen such that said isotope, from the ground state, successively undergoes four excitation steps, viz. a first excitation step wherein said isotope reaches from the ground state a first excitation level 5d¹⁰ 6s6p ³P₁ (A), a second excitation step wherein said isotope reaches from the first excitation level a second excitation level 5d¹⁰ 6s7s ³S₁ (B), a third excitation step wherein said isotope reaches from the second excitation level a third excitation level (C1; C2), and a fourth excitation step wherein said isotope reaches from the third excitation level (C1; C2) an autoionization level 5d⁹(²D_{5/2}) 6s²nl (D).

2. A method according to claim 1, wherein the third excitation level (C1) has the structure 5d⁹ 6s²6p ³P₂.

3. A method according to claim 2,
wherein said isotope is ¹⁹⁶Hg;
wherein the energy of the first excitation level (A) is approximately 39412.597 cm⁻¹,
wherein the energy of the second excitation level (B) is approximately 62350.6 cm⁻¹,
wherein the energy of the third excitation level (C1) is approximately 68886.4 cm⁻¹, and
wherein the energy of the fourth excitation level (D) is approximately 111078.3 cm⁻¹.

4. A method according to claim 3, wherein said radiation contains photons whose wavelength is substantially equal to 253.726 nm, photons whose wavelength is substantially equal to 435.957 nm, photons whose wavelength is substantially equal to 1530.042 nm, and photons whose wavelength is substantially equal to 237.007 nm.

5. A method according to claim 1, wherein the third excitation level (C2) has the structure 5d¹⁰ 6s7p ³P₂.

6. A method according to claim 5,
wherein said isotope is ¹⁹⁶Hg;
wherein the energy of the first excitation level (A) is approximately 39412.597 cm⁻¹,
wherein the energy of the second excitation level (B) is approximately 62350.6 cm⁻¹,
wherein the energy of the third excitation level (C2) is approximately 71207.6 cm⁻¹, and
wherein the energy of the fourth excitation level (D) is approximately 111078.5 cm⁻¹.

7. A method according to claim 6, wherein said radiation contains photons whose wavelength is substantially equal to 253.726 nm, photons whose wavelength is substantially equal to 435.957 nm, photons whose wavelength is substantially equal to 1129.056 nm, and photons whose wavelength is substantially equal to 250.804 nm.

8. A method according to any one of the preceding claims, wherein the ionized isotopes are separated from the non-ionized isotopes by means of an electrical field.

9. A laser source system (1; 301) for generating photons suitable for use in the method according to any one of the preceding claims, which laser source system comprises:
a first laser source (10; 310) for generating photons (L1) suitable for effecting the third excitation step;
a second laser source (20; 320) for generating photons (L2) suitable for effecting the second excitation step;
a third laser source (30; 330) for generating photons (L3) suitable for effecting the first excitation step;
a fourth laser source (40; 340) for generating photons (L4) suitable for effecting the fourth excitation step;
wherein the first laser source (10; 310) comprises a first tuned OPO (11; 311);
wherein the second laser source (20; 320) comprises a second tuned OPO (21; 321);
wherein the third laser source (30; 330) comprises a third tuned OPO (31; 331);
wherein the fourth laser source (40; 340) comprises a fourth tuned OPO (41; 341);
and wherein the four laser sources (10, 20, 30, 40; 310, 320, 330, 340) are pumped with pump light (P1, P2, P3, P4) coming from a common pump laser source (2).

10. A laser source system (1) according to claim 9,
wherein the first OPO (11) is tuned to 1530.04 nm,
wherein the second OPO (21) is tuned to 435.957 nm,
wherein the third OPO (31) is tuned to 761.178 nm, and
wherein the fourth OPO (41) is tuned to 711.03 nm;
wherein the third laser source (30) further comprises a THG (36) which receives the light coming from the third OPO (31) and converts it to 253.726 nm, and
wherein the fourth laser source (40) further comprises a THG (46) which receives the light coming from the fourth OPO (41) and converts it to 237.01 nm.

11. A laser source system (1) according to claim 9,
wherein the first OPO (11) is tuned to 1129.06 nm,
wherein the second OPO (21) is tuned to 435.957 nm,
wherein the third OPO (31) is tuned to 761.178 nm, and
wherein the fourth OPO (41) is tuned to 752.43 nm;
wherein the third laser source (30) further comprises a THG (36) which receives the light coming from the third OPO (31) and converts it to 253.726 nm, and
wherein the fourth laser source (40) further comprises a THG (46) which receives the light coming from the fourth OPO (41) and converts it to 250.81 nm.

12. A laser source system (310) according to claim 9,
wherein the first OPO (311) is tuned to 1530.04 nm,
wherein the second OPO (321) is tuned to 435.957 nm,
wherein the third OPO (331) is tuned to 507.452 nm, and
wherein the fourth OPO (341) is tuned to 474.02 nm;
wherein the third laser source (330) further comprises an SHG (336) which receives the light coming from the third OPO (331) and converts it to 253.726 nm, and
wherein the fourth laser source (340) further comprises an SHG (346) which receives the light coming from the fourth OPO (341) and converts it to 237.01 nm.

13. A laser source system (310) according to claim 9,
wherein the first OPO (311) is tuned to 1129.06 nm,
wherein the second OPO (321) is tuned to 435.957 nm,
wherein the third OPO (331) is tuned to 507.452 nm, and
wherein the fourth OPO (341) is tuned to 501.62 nm;
wherein the third laser source (330) further comprises an SHG (336) which receives the light coming from the third OPO (331) and converts it to 253.726 nm, and
wherein the fourth laser source (340) further comprises an SHG (346) which receives the light coming from the fourth OPO (341) and converts it to 250.81 nm.

14. A laser source system according to any one of claims 9-13, wherein the pump laser source (2) is an Nd:YAG laser for supplying first pump light (P1) of a wavelength of approximately 1064 nm for pumping the first OPO (11);
wherein a first fraction (P1.1) of the light generated by the pump laser source (2) is applied to a THG (23), which converts the received light (P1.1) to second pump light (P2) of a wavelength of approximately 355 nm for pumping the second OPO (21);
wherein a second fraction (P1.2) of the light generated by the pump laser source (2) is supplied to an SHG (33), which converts the received light (P1.2) to light of a wavelength of approximately 532 nm, a part of the light produced by the SHG (33) functioning as third pump light (P3) for pumping the third OPO (31), and another part of the light produced by the SHG (33) functioning as fourth pump light (P4) for pumping the fourth OPO (41).

15. A laser source system according to any one of claims 9-13, wherein the pump laser source (2) is an Nd:YAG laser for supplying light of a wavelength of approximately 1064 nm, which light is applied to a THG (303) which converts the received light to pump light (P) of a wavelength of approximately 355 nm;
and wherein the pump light (P) supplied by the THG (303) is split in a suitable manner into four pump beams (P1, P2, P3, P4) for pumping, respectively, the first OPO (311), the second OPO (321), the third OPO (331), and the fourth OPO (341).

16. A laser source system according to any one of claims 9-15, wherein the relative intensities of the four pump beams (P1, P2, P3, P4) are set such that the relative intensities of the produced photons (L1, L2, L3, L4) substantially compensate the mutual differences of the transition probabilities of said excitation steps.

17. A laser source system according to any one of claims 9-16, wherein the three light beams (L1, L2, L3) for the first three excitation steps are polarized linearly in a first direction, and wherein the fourth light beam (L4) for the fourth excitation step is polarized linearly in a second direction perpendicular to the first direction.

18. A separator (100; 400) for carrying out the method according to any one of claims 1-8, comprising:
an ionization space (110; 410) surrounded by a wall (111; 411) and comprising an interaction area (113; 413);
at least one source (120; 420), arranged under the ionization space (110; 410), for generating mercury atoms and supplying them to the interaction area (113; 413);
means (111, 112; 414) for returning mercury atoms which have passed the interaction area (113; 413) to the source (120; 420);
a laser source system (1) for generating photons suitable for effecting said excitation steps, the laser source system (1) being arranged such that said photons traverse the interaction area (113; 413) substantially in horizontal direction;
and electrical extraction means (130) for generating an electrical field in a horizontal direction perpendicular to the direction of travel of the photons.

19. A separator according to claim 18, wherein the housing (111; 411) has the form of an elongate, horizontally directed tube, the direction of travel of the photons being parallel to the longitudinal direction of the that tube (111; 411), and one or more sources (120; 420) being arranged along the tube (111; 411).

20. A separator according to claim 18 or 19, comprising mirrors for intercepting photons which have traversed the interaction area (113; 413) without being absorbed, said mirrors reflecting the intercepted photons to said interaction area (113; 413) or to the interaction area of a second ionization space (110; 410).

21. A separator according to any one of claims 18-20, wherein the extraction means (130) comprise a positive electrode (131) arranged next to the interaction area (113), an accelerator grid (132) arranged opposite the positive electrode (131), to which a negative voltage is applied, and a collector plate (133), arranged behind the accelerator grid (132), the voltage of said collector plate (133) being less negative than the voltage of the accelerator grid (132).

22. A separator (400) according to any one of claims 18-20, comprising a collecting chamber (430) arranged next to said tube (411), said chamber (430) being connected to the ionization space (410) by a communication channel (440); further comprising a valve (441) for selectively opening or closing the communication channel (440); the extraction means being arranged to direct ionized mercury atoms from the interaction area (413) via the communication channel (440) to the collecting chamber (430).

23. A separator (400) according to claim 22, wherein in the collecting chamber (430) a collector screen (432) for catching mercury atoms is arranged, said collector screen (432) being held at a very low temperature, such that the caught mercury atoms freeze onto the collector screen (432).

24. A method for removing mercury atoms frozen onto a collector screen (432), wherein the collector screen (432) is heated to evaporate the mercury atoms frozen onto it, and wherein the evaporated mercury atoms are allowed to condense on a harvesting element held at a low temperature.
